Europäisches Patentamt

European Patent Office

Office européen des brevets

(19)

(11) Publication number: **0 018 838**
**A1**

(12) # EUROPEAN PATENT APPLICATION

(21) Application number: **80301441.4**

(22) Date of filing: **01.05.80**

(51) Int. Cl.³: **F 16 K 1/42**
**F 16 L 29/00**

(30) Priority: **02.05.79 GB 7915262**

(43) Date of publication of application:
**12.11.80 Bulletin 80/23**

(84) Designated Contracting States:
**BE DE FR GB IT LU NL**

(71) Applicant: **Felton, George Aubrey**
**14, Hall Park**
**Berkhamsted, Hertfordshire(GB)**

(72) Inventor: **Felton, George Aubrey**
**14, Hall Park**
**Berkhamsted, Hertfordshire(GB)**

(74) Representative: **Westwood, Edgar Bruce**
**STEVENS,HEWLETT & PERKINS 5, Quality Court**
**Chancery Lane**
**London WC2A 1HZ(GB)**

(54) Valves having removable seats.

(57) A valve of plastics or reinforced composite material con-struction comprises in combination a body (2), a seat member (7) within the body and a closure member (6) adapted to sealingly engage the seat member to close the valve against fluid flow therethrough and movable away from the seat member to permit fluid flow. The seat member (7) is remov-ably mounted in the body (2) and is connected thereto by means of a plurality of locking members releasably engaged with both the seat member (7) and the body (2). The locking members are balls (14) disposed in co-operating grooves (12) and (11) formed in the body and the seat member, and trans-mit to the body (2) forces exerted on the seat member (7) by the closure member (6) upon closure thereof.

EP 0 018 838 A1

./...

## VALVES HAVING REMOVABLE SEATS.

This invention relates to valves and particularly valves comprising in combination a body, a seat member within the body, a closure member adapted to sealingly engage the seat member to close the valve against fluid flow therethrough and movable away from the seat member to permit fluid flow, the seat member being removably mounted in said body.   The seat member in such valves is substantially load-bearing and is designed so as to be removable for renewal or maintenance.

Prior art valves having a removable seat member have generally been of complicated construction and replacement of the seat member has been a difficult and time consuming operation.   In addition difficulty has been found reliably mounting the seat member to resist operating loads without distorting.

An object of the present invention is to provide a means to secure such a seat member against normal operating loads whilst providing also a simple means for replacement.

The invention provides a valve of the type described in which the seat member is connected to the body by means of a plurality of locking members releasably engaged with both the seat member and the body and disposed to transmit to the body closing forces exerted on the seat member by the closure member.

Preferably the body and the seat member are configured to define jointly a channel in which the plurality of locking members are located. Conveniently the channel may be defined by co-operating grooves formed in the body and the seat member, the grooves being semi-circular to define an annular channel. The locking members may then be balls, and suitably sufficient balls are provided to substantially fill the channel. The balls may be metal or plastics, or a combination of balls of these two materials may be used. The balls may be introduced into and removed from the channel through an access opening in the body, the access opening normally being closed by a plug.

The invention is particularly applicable to valves of plastics or reinforced composite materials of construction where means for adequately locking load-bearing members constitutes a general problem given the generally low tensile and shear properties of the material.

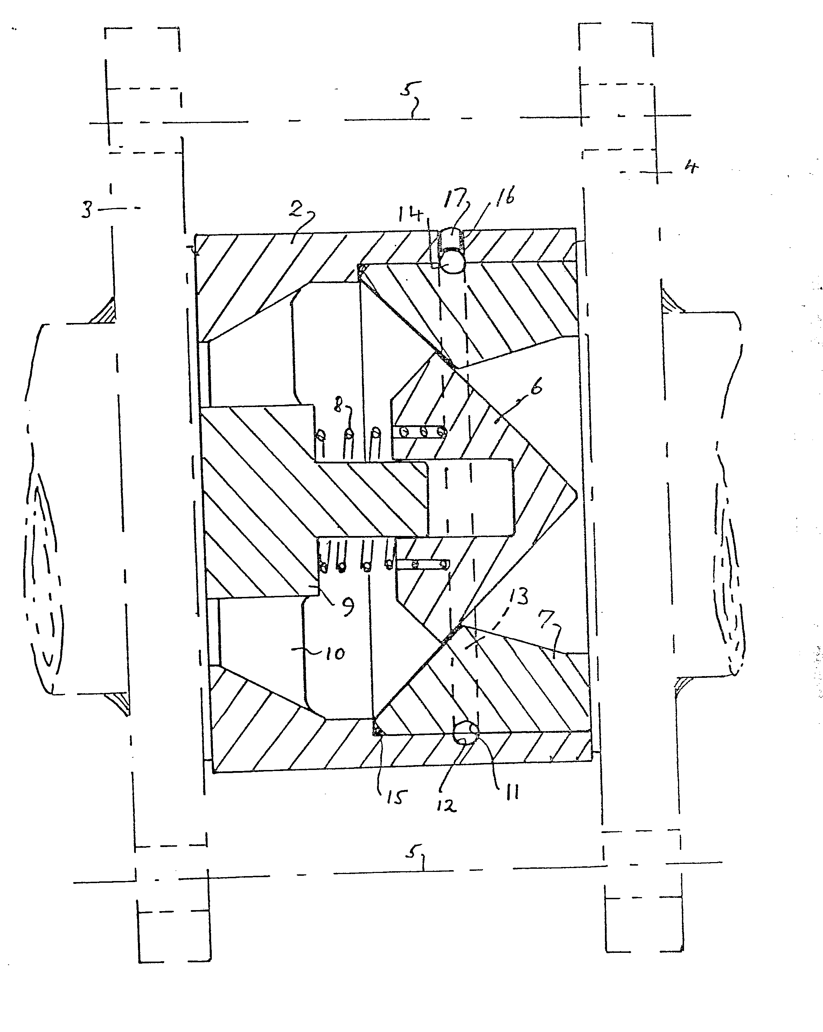

A preferred embodiment of the invention will now be described with reference to the accompanying drawing which is a longitudinal section of a valve in position in a pipeline.

The valve shown in the drawing by way of example is a non-return valve of the spring-actuated type, but it is to be understood that the invention is also applicable to securing a removable seat member in valves of other types, for example butterfly and ball valves. Referring to the drawing, a valve body 2 is located in a pipeline by flanges 3 and 4 which are connected by bolts 5 so as to clamp the valve body between them. A valve closure member 6 is biased against a seat 7 by a spring 8 which is located on a support 9 integrally connected to the valve body 2 by a spider 10. When fluid flow in the direction of the arrow exerts a pressure against the closure member 6 greater than that of the spring 8 the valve opens, and when the pressure exerted by the fluid is less than that of the spring 8 the valve closes by reason of the spring 8 forcing the valve member 6 into sealing engagement with the seat member 7, as will be readily understood.

The seat member 7 is a member separate from the valve body 2, and can be removed therefrom for renewal or maintenance. A semi-circular groove 11 is formed around the periphery of the seat member 7, and a similar groove 12 is formed in the wall of the valve body 2. When the seat member 7 is mounted in the body 2, the two grooves 11 and 12 are disposed adjacent each other and co-operate to define an annular channel 13. The seat member 7 is connected to the body 2 by a plurality of balls 14 located within the channel 13. Sufficient balls 14 are positioned in the channel 13 to substantially fill the channel, and it will readily be seen how the closing forces exerted on the seat member 7 by the closure member 6 are transmitted by the balls 14 to the body 2 of the valve and are evenly

- 4 -

distributed about the periphery of the seat member. Concentrations of stress at specific areas are substantially avoided by this construction. An O-ring or similar seal 15 is clamped between the inner axial end of the seat member 7 and the body 2 to prevent leakage of fluid between the opposed faces of the seat member 7 and the body 2.

The body 2 is provided with an access opening 16 communicating with the channel 13, the opening 16 normally being closed by a plug 17 of a suitable plastics material or by a grub screw.

In order to unlock the connection between the seat member 7 and the valve body 2 to enable the seat member 7 to be removed, the plug 17 is released from the opening 16 and the balls 14 are allowed to run out through the opening 16. The seat member 7 can then be removed. Replacement and relocking of the seat member 7 is the reverse of this procedure, namely the seat member 7 after reconditioning, or a new seat member, is placed within the valve body 2, and balls 14 are run into the channel 13 through opening 16 until they substantially fill the channel, whereupon the plug 17 is replaced.

The valve shown is of typical reinforced composite material construction. The balls 14 may be metal, or of plastics which can provide cost saving. Alternatively, some of the balls 14 may be metal and others may be plastics.

0018838

- 1 -

CLAIMS.

1.    A valve comprising in combination a body (2),
a seat member (7) within the body, a closure member
(6) adapted to sealingly engage the seat member to
close the valve against fluid flow therethrough
and movable away from the seat member (7) to permit
fluid flow, the seat member (7) being removably
mounted in said body, characterised in that the seat
member (7) is connected to said body (2) by means
of a plurality of locking members (14) releasably
engaged with both the seat member (7) and the body
(2) and disposed to transmit to the body closing
forces exerted on the seat member by the closure
member (6).

2.    A valve according to Claim 1, wherein the
body (2) and the seat member (7) are configured to
define jointly a channel (13) in which the plurality
of locking members are located.

3.    A valve according to Claim 2, wherein
the channel (13) is defined by co-operating grooves
(12,11) formed in the body (2) and the seat member
(7).

4.    A valve according to Claim 3, wherein the
grooves (12, 11) are semi-circular and define an
annular channel (13).

5.        A valve according to Claim 4, wherein the locking members (14) are balls.

6.        A valve according to Claim 5, wherein the balls (14) are present in sufficient number to substantially fill the channel (13).

7.        A valve according to Claim 6, wherein at least some of the balls (14) are metal balls.

8.        A valve according to Claim 6 or Claim 7, wherein at least some of the balls (14) are plastics balls.

9.        A valve according to any one of Claims 5 to 8, including an access opening (16) in the body (2) through which the balls (14) may be introduced into and removed from the channel (13), and a plug (17) normally closing the access opening.

10.       A valve according to any one of the preceding claims which is constructed of plastics or reinforced composite materials.

| Category | Citation of document with indication, where appropriate, of relevant passages | Relevant to claim |
|---|---|---|
| X | US - A - 4 009 729 (DEMPGO, ING.) <br> * Totality * | 1-8 |
| | AT - B - 335 808 (BRAUKMANN ARMATUREN) <br> * Totality * | 1-4 |
| | US - A - 3 298 393 (K.C.MOSIER) <br> * Totality * | 1,2,3 |
| | GB - A - 668 563 (MARVIN H. GROVE) <br> * Totality * | 1,2,3 |
| A | DE - U1- 7 801 521 (RUD-KETTEN-FABRIK) <br> * Totality * | 1,5,6,9 |
| A | US - A - 4 060 219 (CRAWFORD) <br> * Totality * | 1,5,6,9 |
| A | FR - A - 865 201 (A.SCHMITT) <br> * Totality * | 1,5 |

**DOCUMENTS CONSIDERED TO BE RELEVANT**

**CLASSIFICATION OF THE APPLICATION (Int. Cl.)**

F 16 K 1/42
F 16 L 29/00

**TECHNICAL FIELDS SEARCHED (Int.Cl.)**

F 16 K 1/00
F 16 K 15/00
F 16 L 29/00
F 16 G 15/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 27-06-1980 | SCHUGANICH |

EPO Form 1503.1 06.78